# EUROPEAN PATENT APPLICATION

(11) **EP 2 114 050 A1**
(43) Date of publication of application: **04.11.2009**
(21) Application number: 08155460.2
(22) Date of filing: 30.04.2008
(51) Int. Cl.: H04L 29/06

(54) **Method and system for allocating resources of a Web-server based on classified usage behavior also for identifying and blocking bot generated HTTP-GET attacks**

(71) Applicant: Deutsche Telekom AG, 53113 Bonn (DE)
(72) Inventor: Roshandel,Mehran, 13591 Berlin (DE); Hauck, Christian, 66386 St. Ingbert (DE); Feld, Michael, 66440 Blieskastel (DE)
(74) Representative: Vossius & Partner

(57) **Abstract**

A system and a method for analyzing requests directed to Web-servers, such to allocate the Web-server resources to its Web-sessions by classifying the usage behavior corresponding to each Web-sessions and e.g. reducing the resources provided by the Web-server to undesired or possibly malicious Web-sessions.

## Description

### Field of the invention

The invention relates to a method and a device for analyzing requests directed to Web-servers, such to allocate the Web-server resources to its Web-sessions by classifying the usage behavior corresponding to each Web-sessions and e.g. reducing the resources provided by the Web-server to undesired or possibly malicious Web-sessions.

### Background of the invention

The use of Web-based platforms is growing in commercial importance both in the business-to-business sector and in the distribution to end customers. The threats posed by possible malicious Web congestion attacks which might tie up such Web services provided to regular customers or business partners, represent a serious threat for a rapidly growing number of companies.

As a remedy, various methods and devices have been developed which can efficiently block many kinds of attacks conducted at the lower layers of the OSI reference model. However, because these approaches lack application semantics, attacks which behave correctly on e.g. layers 1 to 6 of the OSI reference model and do not show any conspicuity with respect to, e.g., network bandwidths or abuse of protocols, may without detection corrupt or tie up a Web service on application layer 7.

Further, due the growing complexity in provided Web services and the corresponding increase in the number of operations and resources required by those, Web services are becoming even more vulnerable to attacks conducted by sending or flooding requests which are not detectable at the lower OSI layers but yet capable of tying up Web services at the upper OSI layers.

The analysis of URL click sequences ("click stream analysis") is a well known specific variant of Web Usage Mining which deals with the examination of data recorded during the use of a Web service within a session or over a plurality of sessions. The aim of a click stream analysis is the establishment of a chronologically sorted list of Web sites which have been visited by a user within a certain time frame. Such movement data is then typically used as a basis for analyses as to the contents, which should reveal the habits, interests and preferences of the user.

The click streams can be detected by a Web server plug-in, by analyzing the Web server logs, and also by a network sensor. However, typical click stream analysis systems avoid in most cases the detection by network sensors, because implementing the detection at the server side represents a much simpler task.

After detecting the click streams, these are combined in sequences of continuous Web site calls of the respective users, so-called "Web-sessions". The Web-sessions are then normally analyzed and evaluated, wherein specific analysis and classification methods are used depending on the examined request. An example might be the classification of Web sessions of users of a shop service, in which the users are divided into probable customers and probable non-customers depending on their access sequence as compared to a training data set.

The normal technologies for identifying so-called HTTP-GET flood attacks, i.e. tying-up of a Web-server by a high frequency of GET requests, only consider the protocol layer. Hence, they typically examine how frequently and from which IP addresses the respective connections to the Web-server are established. Should these examinations detect anomalies, the access to the Web-server is blocked for the respective IP addresses. However, the basic principle behind this approach does not go beyond employing identification and treatment of general flood attacks at the protocol level (e.g. "SYN flood attack"), in particular, an analysis of requests sent to the Web server on the HTTP level is avoided because of performance reasons.

The increasing frequency of flood attacks has encouraged great efforts to be made during the past years to develop and implement identification and defense mechanisms. However, as it can be expected that the structure of future attacks will shift depending on the success of existing methods, attention should be given to the weaknesses of the present defense mechanisms. In this regard, the present methods appear particularly susceptible to attackers which behave in accordance with the standard on all layers of the transport protocol and do not show any strikingly high request frequencies, but which inquire specifically selected, particularly resource-intensive services. An example of such a resource-intensive service is the generation of a PDF document from data of a Web form.

In this way, a malicious request strategy could overload resource-intensive Web services by sending some thousand requests per second only. Considering the existing defense mechanisms, the identification of such distributed attacks, possibly using bot-networks, clearly represents a difficult task, in particular because of the relatively low number of accesses required.

### Summary of the invention

In contrast to the above discussed prior art defense mechanisms, the present invention provides a method and system to classify requests directed to a Web server by collecting a sufficiently large amount of request information, such as user data ("payload"), from the user requests, in order to extract characteristic properties of the requests from the request information which may, for example, be coded in accordance with the HTTP protocol, such as the destination URL and referrer ID. Other obtainable characteristic properties may, for example, comprise the time stamp of the user request, IP address and port of the source computer, to name a few examples.

A network sensor may be used to collect the respective request information in accordance with the present invention.

Based on the extracted characteristic properties, such as for example the time stamp, IP address and port of the source computer, segmentation is performed to collect in session-objects information about each Web-session of the Web-server, such as for example the corresponding URL sequences and/or other information related to the Web-session, wherein each Web-session corresponds to an individual user's usage of the Web service.

In this sense, memory based session-objects are used to collect characteristic properties corresponding to each respective Web-session of the Web-Server. Here, the characteristic properties of each session-object are indicative of the usage behavior corresponding to the respective Web-session.

According to the present invention, the usage behavior corresponding to each of the Web-sessions is classified by comparing the characteristic properties in the corresponding session-object with at least one statistical model describing the usage behavior of a reference user. The reference user may, for example, represent a human or an artificial bot user, wherein the second may represent a bot used for generating automated requests to a Web-server, possibly with malicious intentions.

Finally, the resources of the Web-server are allocated to its Web-sessions based on the results of classifying the usage behavior corresponding to each Web-session, as described above. The resources may, for example, be allocated to block malicious users from accessing or using services of the Web-server.

It is further possible, according to the present invention, to use a higher number of classes than two, in order to enable a more detailed classification of the usage behavior corresponding to each Web-session. It may, for example, be useful to classify the ongoing Web-sessions in desired, i.e. commercially potentially valuable sessions and undesired, i.e. commercially less valuable or even harmful sessions. Thus, classifying the usage behavior corresponding each of the Web-sessions can be used to determine if a respective Web-session is e.g. "commercially valuable", "commercially irrelevant" or "no human". As such, user groups may for example be classified as carrying out commercially valuable transactions such as making a purchase or perhaps as performing a commercially irrelevant task, such as for example obtaining information from the Web service but not making a purchase.

By allocating the resources of the Web-server based on the results of such classifications, Web-sessions being classified as harmful can be stopped, and further access by the respective source computers can be blocked. Also, the allocation of resources can be made dependent on the current server load, such as by withdrawing resources from Web-sessions that are expected to have only minor commercial value. This can be done gradually by changing the guaranteed quality of service, but the connection can also be interrupted by, for example, firewall systems. Here, the blocking itself may for example be carried out by a component firewall manager, wherein e.g. the firewall manager communicates directly with and informs an existing external firewall system of IP addresses to be blocked.

One aspect of the present invention relates to a method of allocating resources of a Web-server to its Web-sessions. In the method, request information is collected which is related to sequences of user requests directed to the Web-Server. From the collected request information, characteristic properties are extracted which are indicative of the corresponding usage behavior underlying the respective user requests. The extracted characteristic properties are then segmented, such that the characteristic properties belonging to each Web-session are collected in a corresponding session-object. Here, the session-object represents a memory object used to collect and store the respective characteristic properties belonging to the corresponding Web-session. The usage behavior corresponding to each Web-session is then classified by comparing the characteristic properties collected in the corresponding session-object with at least one statistical model describing the usage behavior of a reference user of the Web-server. Then, based on the results of classification of the usage behavior corresponding to each Web-session, the resources of the Web-server are allocated to the Web-sessions.

In a preferred embodiment of the invention, the collecting of the request information related to the sequences of user requests directed to the Web-server takes place in a network sensor.

It is also preferred that request information is collected from received sequences of HTTP-GET user requests, wherein it is even more preferred that the characteristic properties extracted from the collected request information are based on at least one of the respective destination-URL, reference-ID, user-agent, data-type of requested resource, timestamp and IP-address/computer-port.

In another preferred embodiment of the invention, the step of segmenting the characteristic properties comprises generating for each new Web-session a corresponding new session-object for collecting the characteristic properties corresponding to the new Web-session.

In yet another preferred embodiment of the invention, the statistical model describing the usage behavior of a reference user is given by a statistical model describing the usage behavior of a bot user. However, as explained above, the statistical model may describe the behavior of a friendly or a malicious user, a potential buyer or an information collector, to name a few examples.

It is further preferred that the statistical model describing the usage behavior of a reference user is given by a Markov-model, and it is even more preferred that the weights of the Markov-model have been adjusted, in a training-mode, to have the Markov-model fit a desired reference user usage behavior.

Here, the training-mode, refers to the phase wherein the Markov-model is trained by means of predetermined training data given in form of predetermined Web-sessions. In this regard, the weights of the Markov-model are adjusted in the training-mode such that the behavior of the Markov-model resembles the considered training data. The respective training data may, for example, be generated by test persons performing Web-page transitions supported by the Web-server, in order to generate a predefined class of a reference user. The Markov-model may, for example, represent a statistical model of the probable transitions from an URL to another URL. Also, because all possible page transitions are allowed in the Markov model, a predetermined basic probability may be assumed for all Web-page transitions that have not been identified during the training phase. In this sense, in a preferred embodiment of the invention, the transitions between the states of the Markov-model correspond with possible user requested transitions between Web-pages provided by the Web-server. Further, in a more preferred embodiment of the invention, the classification of the usage behavior corresponding to a Web-session comprises the comparison of the weights of the Markov-model with the relative frequency of corresponding transitions between the respective Web-pages of the Web-server induced during the respective Web-session. In an even more preferred embodiment of the invention, the comparison of the weights of the Markov-model with the relative frequency of corresponding transitions between the respective Web-pages of the Web-session, further comprises the step of calculating a membership value indicating the likelihood that the usage behavior corresponding to the respecting Web-session under comparison matches the usage behavior described by the Markov-model.

The calculated membership value represents an indicator to estimate the likelihood that the usage behavior of a Web-session may correspond with the usage behavior represented by the respective Markov-model. For example, should the Markov-model represent the behavior of a malicious reference user, and should the corresponding calculated membership value indicate a high likelihood of a match, then the respective usage behavior corresponding to the Web-session under consideration is also most likely malicious.

It is further preferred that classifying the usage behavior corresponding to a Web-session takes place by comparing said calculated membership value with a threshold value to classify whether the respective Web-session is malicious or friendly, wherein, in an even more preferred embodiment of the invention, the threshold value represents an adaptive threshold value, wherein the threshold value is changed with time depending on the calculated membership value. As such, the adaptive threshold value may for example be used for deciding whether a Web session is considered to be a sequence of accesses carried out by a human or a malicious bot. Further, should the number of accesses classified as "malicious bot" or the load of the server exceed a predetermined threshold, then the system may block the Web service for the source computers of the "malicious bot" sessions, such to free resources of the Web service for friendly users.

It is therefore preferred that the step of allocating resources to the users may comprise blocking malicious users from accessing the Web-server, wherein the blocking may for example take place by having a firewall manager block IP-addresses of malicious users.

In yet another preferred embodiment of the invention, the number of classes used for classifying the usage behavior corresponding to a Web-session is larger than 2.

In an alternative preferred embodiment of the invention, the calculated membership value is used as a result of classification of the usage behavior corresponding to the respective Web-session. In other words, as indicated above, a calculated membership value may be used to classify the usage behavior corresponding to a Web-session as, for example, being most likely induced by a malicious user or as being unlikely induced by a potential buyer, to name a few examples. In this respect, the membership value may for example represent a scalar value which indicates the degree of membership the usage behavior corresponding to a considered Web-session has in comparison with a class of usage behavior defined by the respective Markov-model.

Further, in the abovementioned case of having the calculated membership value used as a result of classification of the usage behavior corresponding to the respective Web-session, it is further preferred to allocated resources of the Web-server by prioritization to the Web-sessions, wherein the prioritization is determined based on said calculated membership value

In another preferred embodiment of the invention, it is further preferred to have the allocation of resources of the Web-server to the Web-sessions also account for further information, such as for example the availability of resources of the Web-server.

Another aspect of the present invention relates to a system to allocate resources of a Web-server to its Web-sessions, wherein the system comprises a collecting module which is used for collecting request information related to the sequences of user requests directed to the Web-server. The system further comprises an extraction module which extracts characteristic properties from the collected request information, wherein the characteristic properties are indicative of the corresponding usage behavior, as discussed above. Also comprised by the system is a segmentation module, which is used for segmenting said extracted characteristic properties, such that characteristic properties belonging to each Web-session are collected in a corresponding session-object. Moreover, a classification module is comprised by the system, which classifies the usage behavior corresponding to each Web-session by comparing the characteristic properties collected in each of the respective session-objects with at least one statistical model describing the usage behavior of a reference user. Based on the results of the classification of the usage behavior corresponding to each Web-session, a further comprised allocation module, allocates resources of the Web-server to its Web-sessions.

In a more preferred embodiment of the invention, the collecting module of the system comprises a network sensor and a network interface.

It is also preferred that the allocation module of the system comprises a firewall manager to block IP-addresses of users corresponding to Web-sessions which have been classified by the classification module as being malicious.

### Brief description of the drawings

Preferred embodiments of the invention are described in more detail below with reference to the attached drawings, which are by way of example only.
- Fig. 1: pre-processing step of a click stream analysis for identifying HTTP-GET flood attacks;
- Fig. 2: classification step of a click stream analysis for identifying HTTP-GET flood attacks.

### Detailed description of preferred embodiments

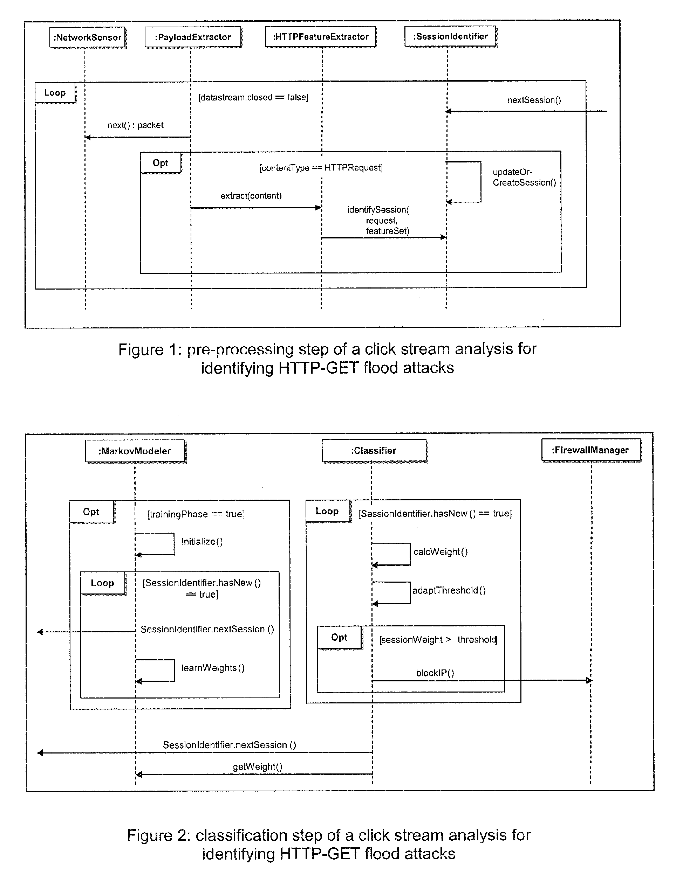

The preferred embodiment presented relates to a click stream analysis for identifying HTTP-GET flood attacks, which consists of a pre-processing step and a classification step. The corresponding pre-processing and classification steps are illustrated in figures 1 and 2 respectively.

The pre-processing step comprises a network sensor which reads user requests directed to a Web-server from a network interface and makes them usable for further processing. The user requests are processed by the component payload extractor, see Fig. 1, which receives the use data and separates them from the addressing data and collects relevant request information from the user requests. Moreover, the payload extractor recognizes whether the packet data are HTTP-GET requests, only the latter are further processed.

The next step of the pre-processing is the extraction of characteristic properties from the collected request information, wherein the HTTP-GET requests are further processed by the component HTTP feature extractor. Here, general characteristics properties such as time stamp and also protocol-specific characteristic properties such as IP address of the sender as well as HTTP protocol-specific characteristic properties such as user agent, referrer or data type (text, binary data or images) may be considered, for other examples the publication [Tan, Pan-Ning Kumar, Vipin: Discovery of Web Robot Sessions Based on their Navigational Patterns] may be consulted. The characteristic properties represent features which are forwarded to the session identifier, which segments the characteristic properties by examining whether a currently examined GET request makes a part of an already existing Web-session and corresponding session-object, or else generates a new session-object corresponding to the new Web-session. The session-objects are provided with the corresponding characteristic properties and forwarded for further processing to the classification step illustrated in Fig. 2.

The classification step includes a machine learning component, the Markov modeler, which can access the session objects of the session identifier, from which it can generate a transition network having weighted edges (Markov model transition weights) in accordance with the sequences of requests given in at least one Web-session used as training data. It follows that the sequence of requests, as requested by a reference user by way of e.g. a respective click stream, corresponds to page transitions supported by the considered Web-service, wherein the reference user may for example represent a human or a bot. The weights of the edges of the transition network (the Markov-model) are adjusted in the training-phase such to represent the relative frequencies of the page transitions undertaken during the respective Web-session defining the training data. After completion of the training phase, the Markov modeler forwards the calculated Markov-model weights to the outside for further use.

The classifier component represents a further module of the classification step shown in figure 2, which reads both the session information from the session identifier and the edge weights of the Markov modeler. Based of this information, the classifier then calculates the entire weight of a session in form of a membership value and decides on the basis of an adaptive threshold whether a session represents a malicious session and should therefore be interrupted by blocking the requesting computer.

The blocking itself is carried out by a firewall manager component, which communicates directly with an existing external firewall system, to which it transmits the IP addresses to be blocked.

The present invention has now been described with reference to embodiments thereof. It will be apparent to those skilled in the art that many changes can be made in the embodiments described without departing from the scope of the present invention. Thus the scope of the present invention should not be limited to the methods and systems described in this application, but only by methods and systems described by the language of the claims and the equivalents thereof.

## Claims

1. A method of allocating resources of a Web-server to its Web-sessions, comprising,
a. collecting request information related to the sequences of user requests directed to the Web-server;
b. extracting characteristic properties from the collected request information, wherein the characteristic properties are indicative of the corresponding usage behavior;
c. segmenting said extracted characteristic properties, such that characteristic properties belonging to each Web-session are collected in a corresponding session-object;
d. classifying the usage behavior corresponding to each Web-session by comparing the characteristic properties collected in each of the respective session-objects with at least one statistical model describing the usage behavior of a reference user;
e. allocating resources of the Web-server to the Web-sessions based on the results of classification of the usage behavior corresponding to each Web-session.

2. The method according to claim 1, wherein collecting the request information related to the sequences of user requests directed to the Web-server takes place in a network sensor.

3. The method according to any of the claims 1 or 2, wherein request information is collected from received sequences of HTTP-GET user requests.

4. The method according to claim 3, wherein the characteristic properties extracted from the collected request information are based on at least one of the respective destination-URL, reference-ID, user-agent, data-type of requested resource, timestamp and IP-address/computer-port.

5. The method according to any of claims 1 to 4, wherein segmenting the characteristic properties comprises generating for each new Web-session a corresponding new session-object for collecting the characteristic properties corresponding to the new Web-session.

6. The method according to any of claims 1 to 5, wherein a statistical model describing the usage behavior of a reference user is given by a statistical model describing the usage behavior of a bot user.

7. The method according to any of claims 1 to 6, wherein a statistical model describing the usage behavior of a reference user is given by a Markov-model.

8. The method according to claim 7, wherein the weights of the Markov-model have been adjusted, in a training-mode, to have the Markov-model fit a desired reference user usage behavior.

9. The method according to any of claims 7 or 8, wherein the transitions between the states of the Markov-model correspond with possible user requested transitions between Web-pages provided by the Web-server.

10. The method according to claim 9, wherein said classifying the usage behavior corresponding to a Web-session comprises comparing the weights of the Markov-model with the relative frequency of corresponding transitions between the respective Web-pages of the Web-server induced during the respective Web-session.

11. The method according to claim 10, wherein comparing the weights of the Markov-model with the relative frequency of corresponding transitions between the respective Web-pages of the Web-session, further comprises the step of calculating a membership value indicating the likelihood that the usage behavior corresponding to the respecting Web-session under comparison matches the usage behavior described by the Markov-model.

12. The method according to claim 11, wherein said step of classifying the usage behavior corresponding to a Web-session comprises comparing said calculated membership value with a threshold value to classify whether the respective Web-session is malicious or friendly.

13. The method according to claim 12, wherein said threshold value, used to determine whether the said Web-session is malicious or friendly, represents an adaptive threshold value, wherein the threshold value is changed with time depending on the calculated membership value.

14. The method according to any of claims 12 or 13, wherein allocating resources to the users comprises blocking malicious users from accessing the Web-server.

15. The method according to claim 14, wherein a firewall manager blocks IP-addresses of malicious users.

16. The method according to claim 11, wherein the number of classes used for classifying the usage behavior corresponding to a Web-session is larger than 2.

17. The method according to claim 11, wherein the said calculated membership value represents a results of classification of the usage behavior corresponding to the respective Web-session.

18. The method according to claim 17, wherein resources of the Web-server are allocated by prioritization to the Web-sessions based on said calculated membership value.

19. The method according to any of the claims 1 to 18, wherein the allocation of resources of the Web-server to the Web-sessions also accounts for the availability of resources.

20. A system to allocate resources of a Web-server to its Web-sessions, comprising,
a. a collecting module for collecting request information related to the sequences of user requests directed to the Web-server;
b. an extraction module for extracting characteristic properties from the collected request information, wherein the characteristic properties are indicative of the corresponding usage behavior;
c. a segmentation module for segmenting said extracted characteristic properties, such that characteristic properties belonging to each Web-session are collected in a corresponding session-object;
d. a classification module for classifying the usage behavior corresponding to each Web-session by comparing the characteristic properties collected in each of the respective session-objects with at least one statistical model describing the usage behavior of a reference user;
e. an allocation module for allocating resources of the Web-server to its Web-sessions based on the results of classification of the usage behavior corresponding to each Web-session.

21. The system according to claim 20, wherein the collecting module comprises a network sensor and a network interface.

22. The system according to any of claims 20 or 21, wherein the allocation module comprises a firewall manager to block IP-addresses of users corresponding to Web-sessions which have been classified by the classification module as being malicious.
